# EUROPÄISCHE PATENTSCHRIFT

(11) **EP 0 578 058 B1**
(45) Veröffentlichungstag und Bekanntmachung des Hinweises auf die Patenterteilung: **15.01.1997**
(21) Anmeldenummer: 93110063.0
(22) Anmeldetag: 24.06.1993
(51) Int. Cl.: B29C 33/72, B08B 3/02, B28B 7/00

(54) **Verfahren zum Reinigen von Formen**
Method for cleaning molds
Méthode pour le nettoyage de moules

(30) Priorität: 02.07.1992 DE 4221706
(43) Veröffentlichungstag der Anmeldung: 12.01.1994
(73) Patentinhaber: Heidelberger Zement AG, D-69120 Heidelberg (DE); Herzog Maschinenfabrik GmbH & Co., D-49086 Osnabrück (DE)
(72) Erfinder: Böing, Raymund, W-6912 Dielheim (DE); Eissner, Wolfgang, W-7520 Bruchsal/Untergrombach (DE); Kraeft, Uwe, W-6906 Leimen 1 (DE); Olek, Jürgen, W-6831 Plankstadt (DE); Wanka, Petra, W-6840 Lampertheim (DE); Weyerhäuser, Carl-Christian, W-6900 Heidelberg (DE)
(74) Vertreter: Schmid, Rudolf, Dipl.-Ing., Patentanwalt

(56) Entgegenhaltungen:
- EP-A- 0 201 746
- EP-A- 0 443 380
- WO-A-91/03360
- DE-A- 3 443 286
- DE-A- 4 005 870
- FR-A- 504 548
- GB-A- 581 642
- GB-A- 1 550 332
- GB-A- 2 024 363
- GB-A- 2 046 086
- GB-A- 2 072 082
- US-A- 3 348 802

## Beschreibung

Die Erfindung betrifft ein Verfahren zum Reinigen Von Formen von ihren Rückständen mit Hilfe von Schabern und/oder Bürsten und/oder Reinigungsmedien.

Ein derartiges Reinigungsverfahren ist beispielsweise aus der GB-A-581 642 bekannt, in der ein Verfahren und eine Vorrichtung zum Spritzgießen von Kunststoffteilen beschrieben sind. Das dortige Verfahren ist weitgehend automatisiert und beinhaltet auch die mechanisierte Reinigung der Spritzgußformen nach Herauslösen des hergestellten Kunststoffgegenstandes. Diese mechanisierte Reinigung erfolgt mittels Bürstenelementen, die innerhalb der Gußform bewegt werden und so deren Innenwandung säubern. Das aus der GB-A-581 642 bekannte Verfahren funktioniert jedoch nur im Zusammenhang mit der speziell dazu konzipierten Vorrichtung, die eine Vielzahl von genormten Spritzgußformen in einem kontinuierlichen Herstellungsprozeß von Kunststoffteilen verwendet, wobei an die Maßtoleranz der Kunststoffteile keine besonderen Anforderungen gestellt werden und wobei die verwendeten Spritzgußformen eine sehr einfache geometrische Gestalt aufweisen sowie robust und unempfindlich konstruiert sind. Formen, die auch an ihrer Innenwandung Stoßkanten aufweisen, können mit diesem bekannten Verfahren sicherlich nicht zufriedenstellend gereinigt werden, da das Entfernen von Rückständen aus diesen Stoßkanten besondere Maßnahmen erfordert.

Eine besonders ausgestattete Gießform einer Vorrichtung zum Gießen und Manipulieren des sog. Masseblocks im Zuge der Herstellung von Leichtbetonbaukörpern ist aus der DE-A-3 443 286 bekannt. Die dortige Gießform weist Scharniergelenke auf, so daß die Seitenwände der Gießform in eine mit dem Formboden stufenfreie Ebene abklappbar sind. Eine Formseitenlängswand ist von den übrigen Formwänden lösbar und als Palette für den Formling zu verwenden. Die Reinigung wird zwar durch die Ausgestaltung der Gießform erleichtert, jedoch erfolgt diese manuell, wobei ein hoher Kraft- und Zeitaufwand erforderlich ist und wobei diese Reinigungstätigkeit für den Ausführenden wenig attraktiv ist.

Ausgehend von dem bekannten Stand der Technik liegt der Erfindung die Aufgabe zugrunde, ein Verfahren der in Rede stehenden Art unter arbeitsökonomischen Gesichtspunkten derart auszugestalten, daß der eigentliche Reinigungsvorgang weitgehend automatisch erfolgt.

Die voranstehende Aufgabe wird durch die Merkmale des Patentanspruches 1 gelöst. Danach ist ein Verfahren der in Rede stehenden Art derart weitergebildet, daß Formen verwendet werden, deren jeweilige Wandabschnitte so durch Scharniere untereinander verbunden sind, daß sie in eine Ebene herausgeklappt werden können, daß vor Beginn des Reingungsvorganges die Formen jeweils in eine Ebene heruntergeklappt und in heruntergeklapptem Zustand magaziniert werden, daß sodann jeweils mindestens eine Form automatisch in eine Reinigungsvorrichtung transportiert, dort behandelt und anschließend automatisch wieder aus der Reinigungsvorrichtung heraustransportiert wird und daß schließlich die Formen nach dem Reinigungsvorgang wiederum in heruntergeklapptem Zustand magaziniert werden.

Erfindungsgemäß ist zunächst erkannt worden, daß die Automatisierung des Reinigungsverfahrens von Formen eine Reinigungsvorrichtung mit Bürsten, Schabern und/oder Reinigungsmedien erfordert, in der die Behandlung der Formen halbautomatisch oder automatisch erfolgt. Ferner ist erkannt worden daß außerdem sowohl die Beschickung der Reinigungsvorrichtung mit den zu reinigenden Formen als auch die Entnahme der gereinigten Formen aus der Reinigungsvorrichtung möglichst automatisch erfolgen sollte. Auf diese Weise wird der Arbeitsaufwand bei der Überwachung des Reinigungsprozesses sehr gering gehalten. Bei Anwendung des erfindungsgemäßen Verfahrens kann außerdem der Reinigungsprozeß der Formen einfach in eine Kette von weiteren, anderen Arbeitsschritten integriert werden.

Erfindungsgemäß ist des weiteren erkannt worden, daß der Aufbau von Formen und auch ihre Reinigung besonders einfach ist, wenn die einzelnen, die Form bildenden Wandabschnitte alle oder nur gruppenweise über Scharniere miteinander verbunden sind, so daß durch ein Auseinanderklappen der einzelnen Wandabschnitte an den Scharnieren die Ecken und Kanten zwischen den einzelnen Wandabschnitten aufgeweitet und gereinigt werden können.

Außerdem ist es nicht erforderlich, die zu einer Form gehörenden Einzelteile aus einer großen Anzahl von Einzelteilen, die von verschiedenen Formen gleichen Typs herrühren, herauszusuchen, da ja die zu einer Form gehörenden Wandabschnitte auch nach der Demontage über die Scharniere beweglich miteinander verbunden bleiben.

Durch die in den Ansprüchen 2 bis 13 aufgeführten Maßnahmen sind vorteilhafte Weiterbildungen des im Hauptanspruch angegebenen Verfahrens möglich.

In einer vorteilhaften Ausgestaltung des erfindungsgemäßen Verfahrens werden die Formen zum Transportieren und/oder für die Behandlung in der Reinigungsvorrichtung in einer Haltevorrichtung horizontal, vertikal oder geneigt angeordnet. Die Verwendung einer Haltevorrichtung ist beispielsweise dann von Vorteil, wenn die Formen bzw. die Formteile allseitig gereinigt werden sollen und wenn sie besonders verschmutzt sind, so daß sie innerhalb der Reinigungsvorrichtung durch rotierende oder vibrierende Bürsten, Schaber und/oder Reinigungsmedien, wie Hochdruckwasserstrahlen, stark beansprucht werden, so daß ihr Eigengewicht nicht dazu ausreicht, sie in einer vorbestimmten Position zu halten. Von Vorteil ist es, die Haltevorrichtung so auszugestalten, daß die Lage der Form bzw. der Formteile während des Reinigungsprozesses gezielt verändert werden kann. Dadurch wird die allseitige Reinigung der Formen bzw. der Formteile wesentlich erleichtert.

Das Transportieren der Formen und/oder der Haltevorrichtung in und aus der Reinigungsvorrichtung wird auf einfache Weise mit Hilfe von Rollen oder Bändern oder mit Hilfe von Transportwagen im Kreisverfahren oder Reversierverfahren realisiert. Je nach Verschmutzungsgrad kann es sinnvoll sein, daß die Formen die Reinigungsvorrichtung mehrfach durchlaufen. Um den Reinigungsprozeß zu rationalisieren, können auch mehrere Formen die Reinigungsvorrichtung gleichzeitig durchlaufen.

Von Vorteil ist es, wenn als Haltevorrichtungen Kassetten, Magazine und/oder Paletten verwendet werden, die in einer Lagerposition, beispielsweise in einem Bahnhof, anordenbar sind und aus dieser Position abgerufen werden können. Dadurch kann der Automatisierungsgrad des gesamten Produktionsprozesses erhöht werden.

Insbesondere wenn die Reinigung trocken erfolgt, also lediglich durch rotierende oder vibrierende Walzen oder Bürsten, in deren Borsten gegebenenfalls Hartstoffe eingebunden sind, entsteht bei der Reinigung eine Art Staub bzw. sandförmiger Abrieb.

Es ist daher sinnvoll und zweckmäßig, die eigentliche Reinigung in einem geschlossenen Gehäuse der Reinigungsvorrichtung durchzuführen und den Abrieb anschließend abzusaugen bzw. zu entsorgen Auch bei der Verwendung von Reinigungsmedien, wie z.B. Hochdruckwasserstrahlen, ist es sinnvoll, die Behandlung der Formen in einem geschlossenen Gehäuse der Reinigungsvorrichtung durchzuführen und gegebenenfalls anschließend das Reinigungsmedium zusammen mit dem etwaig auftretenden Abrieb zu entsorgen.

Erfolgt die Reinigung der Formen in einem Ultraschallbad, so ist es vorteilhaft dieses mit Zusätzen von Reinigungsmitteln und/oder Säuren, insbesonder im Falle von Beton- oder Mörtelverunreinigungen Citronensäure oder Phosphorsäure, zu versehen und die Reinigung bei 5°C bis 100°C vorzunehmen.

Ein besonderer Vorteil des erfindungsgemäßen Verfahrens besteht darin, daß es sich einfach in einen automatischen Produktionsprozeß integrieren läßt, der durch speicherprogrammierbare Steuerungen und/oder Computer automatisch gesteuert und verwaltet wird.

Besonders vorteilhaft ist es, wenn die zu reinigenden Formen vor der Behandlung in der Reinigungsvorrichtung auch automatisch demontiert werden und/oder nach der Behandlung auch automatisch wieder aufgebaut werden. Das Zerlegen der Formen vor dem eigentlichen Reinigunsprozeß ist oftmals erforderlich, um auch Rückstände in Kanten und Ecken der Formen zu entfernen.

Als weitere Arbeitsgänge seien hier beispielsweise die Behandlung der Formen mit Trennmitteln, das Einbringen von trennenden, organischen Folien aus Papier oder Kunststoffen vor dem Befüllen der Formen mit Füllmaterial und das Befüllen der Formen genannt.

Der integrierte Produktionsprozeß kann ferner den Transport der befüllten Formen mit Hilfe von Rollen, Bändern, Wagen, Schwenk- und Hebearmen und/oder Robotern umfassen sowie ein automatisches Entformen und ein automatisches Magazinieren der gereinigten Formen.

Es sei an dieser Stelle ausdrücklich darauf hingewiesen, daß das erfindungsgemäße Verfahren alleine oder auch in Kombination mit anderen Reinigungsverfahren durchgeführt werden kann.

Die zur Durchführung des Verfahrens verwendete Form zur Verarbeitung von allen Arten von Beton, Mörtel, Kalksandstein, Zementleim, Gips, Prozellan, Keramik, Glas, Gießereisand, Metallen und Kunstoffen, besteht aus mehreren Wandabschnitten, deren Verbindungen untereinander zumindest teilweise reversibel lösbar sind, und die insbesondere durch ein voranbeschriebenes Verfahren reinigbar ist.

Die voranstehend genannte Form ist so ausgestaltet, daß zumindest zwei der Wandabschnitte über mindestens ein Scharnier so miteinander verbunden sind, daß sie aus der Position, die sie im zusammengebauten Zustand der Form relativ zueinander einnehmen, herausklappbar sind.

Für bestimmte Anwendungen sind rotationssymmetrische, insbesondere zylinderförmige Formen vorteilhaft, wobei der Boden erfindungsgemäß über mindestens ein Scharnier mit der rotationssymmetrischen, gebogenen Wandung verbunden ist. Dadurch wird erreicht, daß auch die Stoßkante zwischen Seitenwandung und Boden solcher Formen von Rückständen und Verunreinigungen gereingt werden kann.

Ist die Form quaderförmig, insbesondere würfelförmig, ausgebildet so ist es besonders vorteilhaft, wenn jeweils eine Seitenfläche der Quaderform einen Wandabschnitt bildet. Scharniere können bei dieser Ausgestaltung einer Form an verschiedenen Stoßkanten der Wandungsabschnitte angeordnet sein, je nach den Anforderungen des Anwenders. Besonders vorteilhaft ist es, wenn die Scharniere zwischen den einzelnen Wandabschnitten so angeordnet sind, daß alle miteinander über Scharniere verbundenen Wandabschnitte in eine Ebene herausklappbar sind. Bei einer quaderförmigen Form kann dies beispielsweise bedeuten, daß alle Seitenwände über Scharniere mit der Bodenplatte verbunden sind.

Nach dem Lösen der Verbindungen der einzelnen Wandabschnitte untereinander können die Seitenwände dann einfach in die Ebene der Bodenplatte heruntergeklappt werden. Beispielsweise bei einem solchen Aufbau ist es vorteilhaft, wenn die Wandabschnitte, hier die Seitenwandabschnitte, über Spannbänder, Spannbügel, Spannhaken und/oder Schnellverschlüsse zumindest im Bereich der Stoßkanten verbunden sind.

Für die eingangs genannten Gußmaterialien ist es besonders vorteilhaft, wenn die Form im wesentlichen aus Stahl, insbesondere aus nicht rostendem Stahl, oder aus ausreichend widerstandsfähigen Kunststoffen mit oder ohne Faserverstärkung gebildet ist. Desweiteren vorteilhaft ist es, wenn die Wandabschnitte an der dem Füllmaterial zugewandten Seite oberflächenvergütet, oberflächenbehandelt oder beschichtet sind. Es bietet sich insbesondere eine Oberflächenbehandlung mit Ölen, Wachsen, Teflon, Kunstharzen und Polyurethan an.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 jeweils nachgeordneten Ansprüche, andererseits auf die nachfolgende Erläuterung von Ausführungsbeispielen der Erfindung anhand der Zeichnung zu verweisen.

Es zeigen:
- Figur 1: die schematische Darstellung einer bei dem erfindungsgemäßen Verfahren verwendeten Reinigungsvorrichtung in Verbindung mit einer Transportvorrichtung,
- Figur 2: schematisch eine weitere Reinigungs und Transportvorrichtung
- Figur 3a: eine schematische Aufsicht und
- Figur 3b: einen schematischen Schnitt durch eine Haltevorrichtung,
- Figur 4: ein Schema eines automatischen Produktionsprozesses,
- Figur 5: ein Gestell zur Magazinierung von Formen,
- Figur 6: ein Schema für die integrierte, automatische Beschickung einer Reinigungsvorrichtung,
- Figur 7: die Lagerung von Bürsten und Walzen auf Federn.
- Die Figuren 8a und b: eine würfelförmige Form in zusammengebautem und teilweise demontiertem Zustand,
- die Figuren 9a bis c: eine weitere würfelförmige Form und Einzelteile des Aufbaus dieser Form und
- die Figuren 10a bis c: verschiedene Ansichten einer weiteren würfelförmigen Form in demontiertem und aufgebautem Zustand.

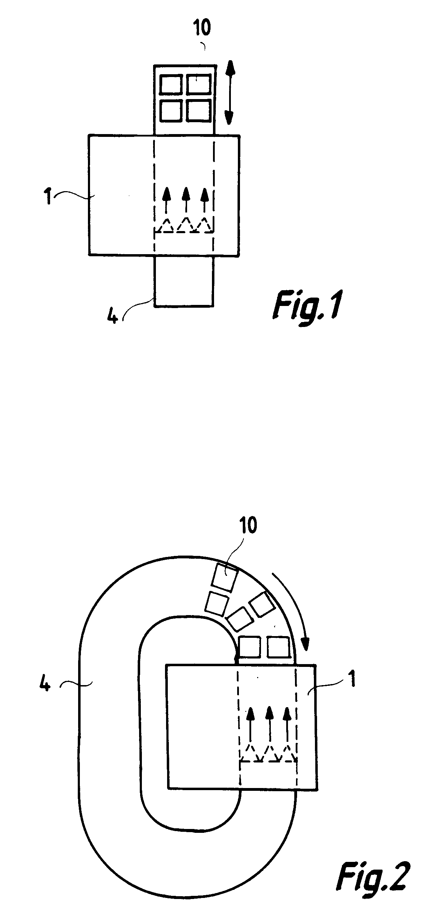

In Figur 1 ist mit 1 eine Reinigungsvorrichtung bezeichnet, die vorzugsweise ein geschlossenes Gehäuse umfaßt, in dem Walzen, Bürsten und/oder Schaber angeordnet sind, die rotieren oder vibrieren können. Ferner können in der Reinigungsvorrichtung Reinigungsmedien vorhanden sein, wie z.B. Hochdruckwasserstrahlen und Ultraschallbäder.

Mit 4 ist eine Transportvorrichtung in Form von Rollen, Wägen oder Bändern bezeichnet, die in Vorwärts- und Rückwärtsrichtung bewegbar ist, was durch den Doppelpfeil angedeutet ist. Auf der Transportvorrichtung 4 sind zu reinigende Formen 10 gegebenenfalls in Kassetten, Magazinen oder auf Paletten angeordnet, die außerhalb der Reinigungsvorrichtung an einer Stelle der Transportvorrichtung 4 aufgelegt werden und an dieser Stelle nach dem Reinigungsvorgang auch wieder von der Transportvorrichtung 4 abgenommen werden.

In Figur 2 ist eine Reinigungsvorrichtung entsprechend Figur 1 schematisch dargestellt, wobei hier der Transport der Formen 10 im Kreisverfahren durch ein Endlosband 4 erfolgt. Gegenüber der in Figur 1 dargestellten Ausführungsform hat dies den Vorteil, daß die Auflage und Abnahme der Formen 10 an jeder Stelle des Bandes 4 außerhalb der Reinigungsvorrichtung 1 möglich ist.

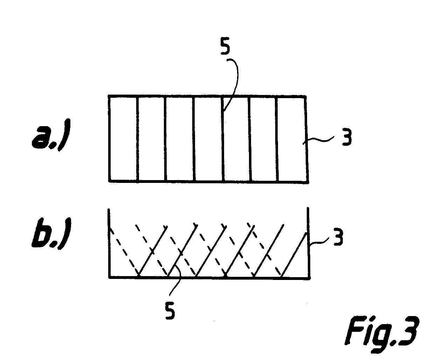

In Figur 3a ist eine Aufsicht auf eine kassettenartige Haltevorrichtung 3 dargestellt. Die Seitenwände 5 dieser Haltevorrichtung 3 dienen als Halteorgane und sind umklappbar, was in Figur 3b, die einen Schnitt durch die Haltevorrichtung 3 zeigt, schematisch angedeutet ist. Dadurch läßt sich auf einfache Weise die Lage der in der Haltevorrichtung 3 angeordneten Formen bzw. Formteile bezüglich der in der Reinigungsvorrichtung angreifenden Bürsten und Schaber sowie der Reinigungsmedien verändern. Mit einer derart ausgestalteten Haltevorrichtung 3 ist also eine mehrseitige Reinigung der Formen bzw. Formteile möglich.

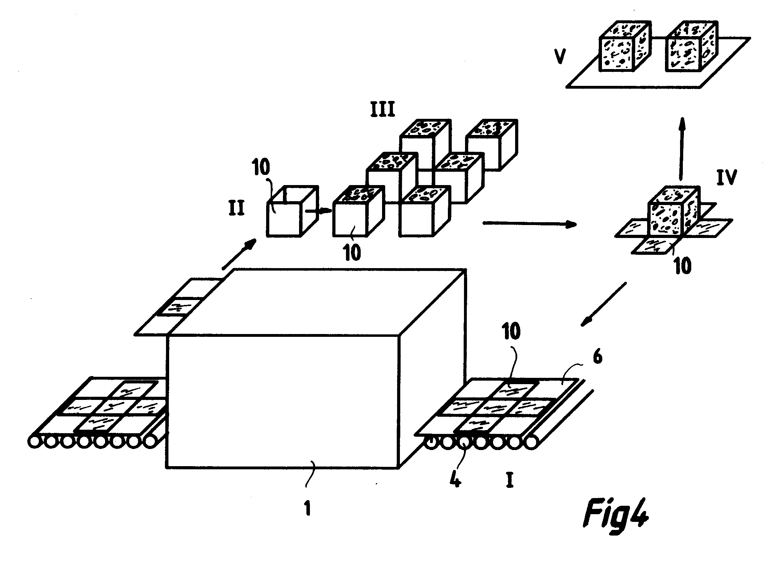

In Figur 4 ist ein Produktionsprozeß schematisch dargestellt, bei dem die Formen 10 in einem intergrierten Verfahrenskonzept mit einer Steuerung und Verwaltung durch speicherprogrammierbare Steuerungen und/oder Computer automatisch zusammengesetzt, oberflächenbehandelt, befüllt und mit Rollen, Bändern, Wagen, Schwenk- und Hebearmen und/oder Robotern transportiert werden, woran sich eine Lagerung der befüllten Formen und das automatische Entformen sowie die automatische Reinigung der Formen in der Reinigungsvorrichtung 1 mit einer Transportvorrichtung 4 zum Beispiel in Form von Rollen, Bändern oder Wagen anschließen. Die Formen 10 werden anschließend automatisch magaziniert und können nach Bedarf wiederverwendet werden. Sie werden vor der Reinigung in Transportrahmen 6 gelegt, in denen sie auch magaziniert werden. Die entformten Formteile, in dem hier dargestellten Ausführungsbeispiel Würfel, aus Beton, Mörtel, Kalksandstein, Zementleim, Gips, Porzellan, Keramik, Glas, Gießereisand, Metallen oder Kunststoffen können gelagert und/oder weiter behandelt z.B. automatisch gewogen, zu Prüfmaschinen transportiert und nach dem Prüfvorgang entsorgt bzw. versandt werden. Die Reihenfolge der einzelnen Prozeßschritte ist durch Pfeile angedeutet.

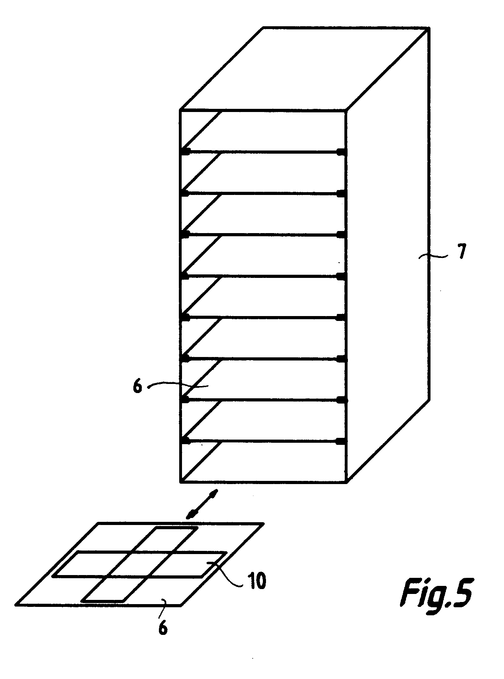

In Figur 5 ist ein Gestell 7 mit Halteorganen 5 für die Magazinierung und den automatischen Abzug bzw. die automatische Beschickung von Formen 10, die in Transportrahmen 6 liegen, dargestellt. Derartige Gestelle 7 werden erfindungsgemäß zum automatischen Ablegen und Herausnehmen von verschmutzten und gereinigten Formen verwendet.

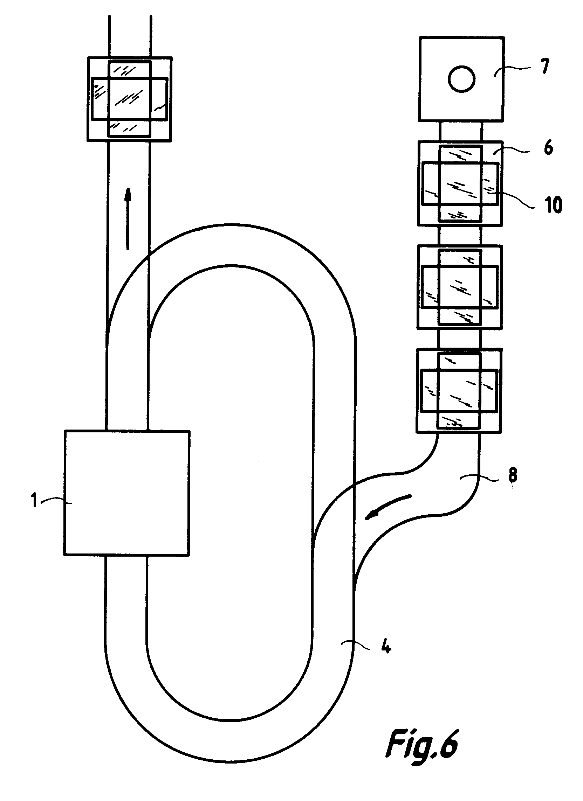

In Figur 6 ist dargestellt, wie die Transportrahmen 6 mit den Formen 10 hintereinander auf einer Transportvorrichtung 8 abgelegt werden, die an die der Reinigungsvorrichtung 1 zugeordneten Transportvorrichtung 4 in Längsrichtung, seitlich über eine Weiche angeschlossen ist. Die gereinigten Formen verlassen dann in umgekehrter Weise den Transportkreis der Reinigungsvorrichtung 1.

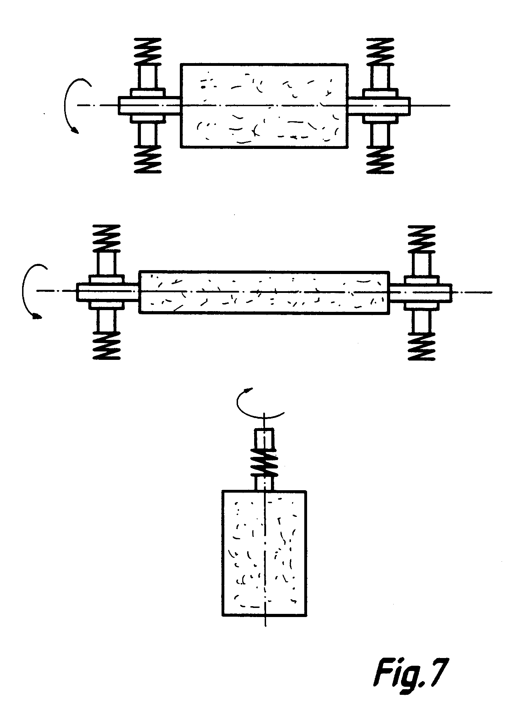

In Figur 7 ist die Lagerung von horizontal und vertikal angeordneten Bürsten und Walzen auf Federn dargestellt. Dabei kann der Antrieb mit den Bürsten und/oder Walzen ungefedert verbunden sein, so daß das gesamte System aus Bürste(n) bzw. Walze(n) mit Antrieb(en) gegenüber der Transportvorrichtung und dem Gehäuse der Reinigungsvorrichtung federt. Die Bürsten und Walzen können in der Position und bezüglich des Ein- und Ausschaltens der Drehbewegung sensorgesteuert sein. Die Bewegung der Transportvorrichtung ist dann beispielsweise von jener der Bürsten und Walzen unabhängig.

Die Reinigungsvorrichtung kann auch derart ausgebildet sein, daß die zu reinigende Form örtlich fest und die Reinigungsvorrichtung insgesamt räumlich beweglich ist. Außerdem können die Reinigungsvorrichtungen außer mit Bürsten und/oder Walzen mit Schabern, Düsen, Rührvorrichtungen und/oder Reinigungsmedien ausgerüstet sein.

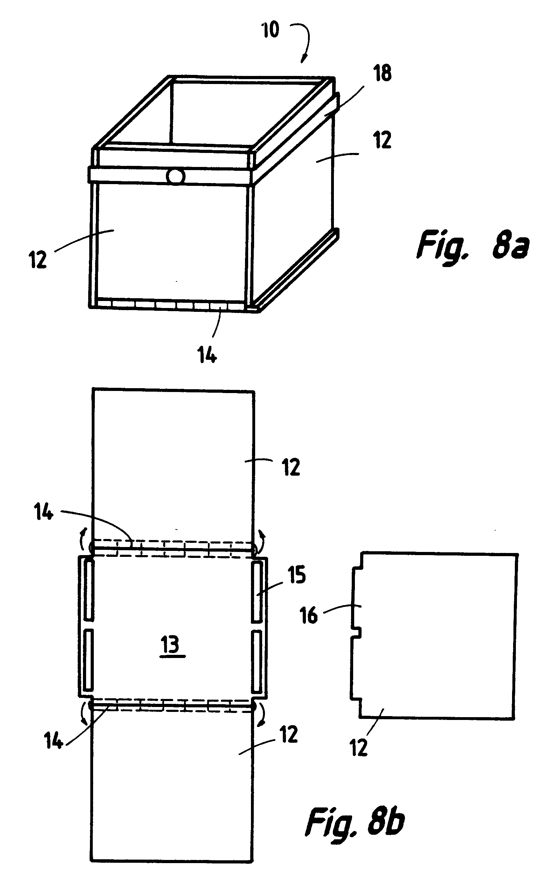

In Figur 8a ist mit 10 eine würfelförmige Form in aufgebautem Zustand bezeichnet, die eine Grundplatte 13 (Figur 8b) und vier Seitenwände 12 aufweist. Zwei gegenüberliegende Seitenwände 12 sind über Scharniere 14 mit der Bodenplatte 13 verbunden und über die Scharniere 14 in die Ebene der Bodenplatte 13 klappbar, wenn die Verbindung zu den übrigen Seitenwänden 12 gelöst ist. Die übrigen Seitenwände 12 sind mittels einer Steckverbindung mit der Bodenplatte 13 verbunden, wobei die Bodenplatte 13 in den entsprechenden Randbereichen Stecköffnungen 15 aufweist und die entsprechenden Seitenwände 12 korrespondierende Steckfortsätze 16. Der Zusammenhalt der Seitenwände im aufgebauten Zustand wird über ein Spannband 18, das am Umfang der Form 10 angeordnet ist, gewährleistet.

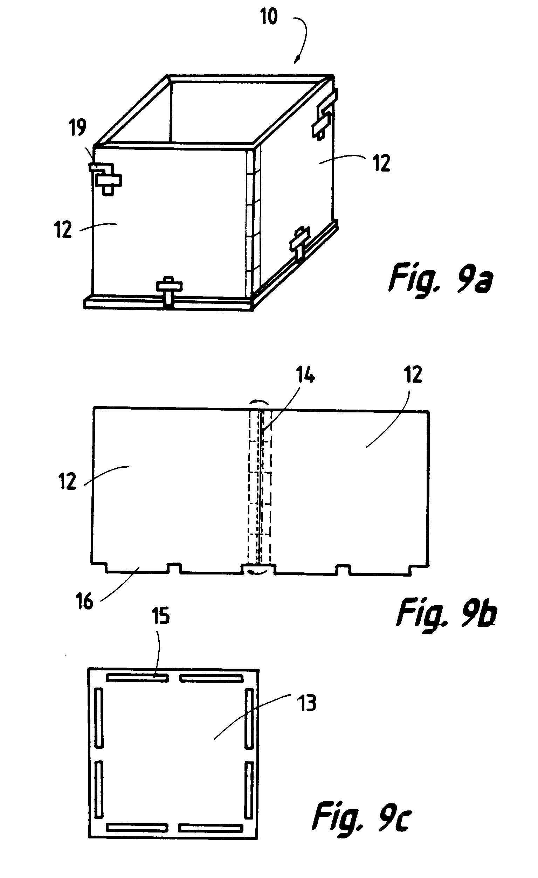

In Figur 9a ist eine weitere würfelförmige Form 10 im zusammengebauten Zustand dargestellt. Die Seitenwandabschnitte 12 sind hier alle über Steckverbindungen, die aus Stecköffnungen 15 in der Bodenplatte 13 (Figur 9c) und entsprechenden Steckfortsätzen 16 an den Seitenwandungen 12 gebildet sind, mit der Bodenplatte 13 verbunden. Jeweils zwei benachbarte, aneinandergrenzende Seitenwandungen 12 sind miteinander über Scharniere 14 verbunden, so daß sie nach dem Herauslösen aus der Bodenplatte 13 in eine Ebene aufklappbar sind, was in Figur 2b dargestellt ist. Die Verbindung zwischen den beiden über Scharniere 14 gebildeten "Doppelseitenwandungen" wird mit Hilfe von Spannbügeln 19 stabilisiert wie auch die Verbindung zwischen jeder Seitenwandung 12 und der Bodenplatte 13.

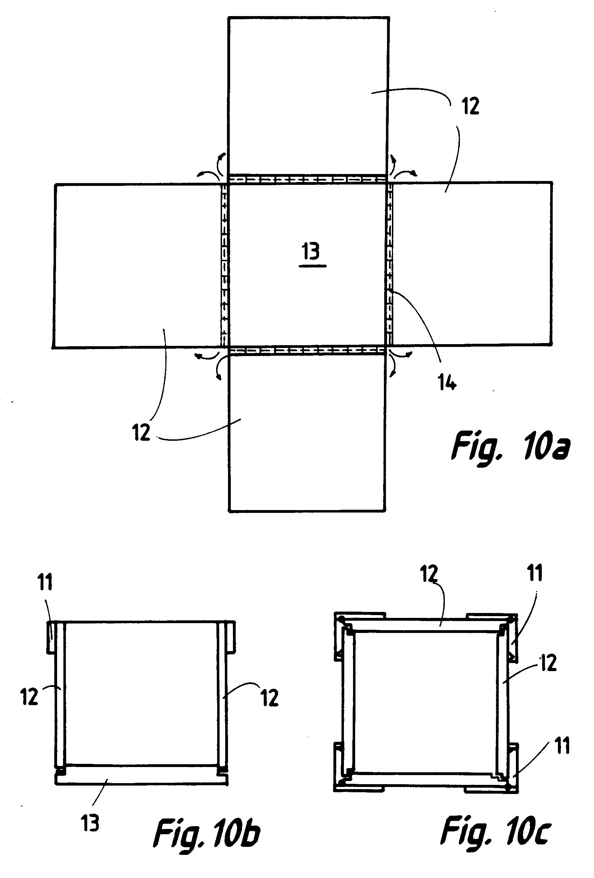

In Figur 10a ist eine weitere würfelförmige Form in vollständig demontiertem, d.h. in diesem Falle aufgeklapptem Zustand dargestellt. Alle vier Seitenwandungen 12 sind über Scharniere 14 mit der Bodenplatte 13 verbunden.

In Figur 10b ist ein Schnitt durch eine derartige Form in aufgebautem Zustand dargestellt, wobei am oberen Rand bzw. im oberen Bereich der Form Schnellverschlüsse 11 zwischen jeweils benachbarten Seitenwandungen 12 angeordnet sind, die ein Aufklappen der Form verhindern sollen. Die genaue Anordnung dieser als Eckprofile ausgebildeten Schnellverschlüsse 11 ist auch nochmals in der Figur 10c dargestellt, die eine Draufsicht auf die Form in zusammengebautem Zustand darstellt.

Es sei abschließend darauf hingewiesen, daß die erfindungsgemäße Lehre durch die voranstehenden Ausführungsbeispiele lediglich erläutert, jedoch keinesfalls eingeschränkt ist.

Vielmehr läßt sich die erfinderische Lehre auch bei Verfahren realisieren, die weitere Verfahrensschritte umfassen, und auch bei Formen, die weitere konstruktive Merkmale umfassen.

Zudem umfaßt die erfinderische Lehre auch Anwendungen bei anderen Technologien, wie z.B. Spritzguß, Metallurgie, Leichtmetallverarbeitung oder der Verarbeitung von organischen Schäumen.

### Bezugszeichenliste

- 1: Reinigungsvorrichtung
- 2: -
- 3: Haltevorrichtung
- 4: Transportvorrichtung
- 5: Halteorgan
- 6: Transportrahmen
- 7: Gestell
- 8: Transportvorrichtung
- 9: -
- 10: Form
- 11: Schnellverschluß
- 12: Seitenteil
- 13: Bodenteil
- 14: Scharnier
- 15: Stecköffnung
- 16: Steckfortsatz
- 17: -
- 18: Spannband
- 19: Spannbügel

## Patentansprüche

1. Verfahren zum Reinigen von Formen von ihren Rückständen mit Hilfe von Schabern und/oder Bürsten und/oder Reinigungsmedien, wobei
(a) Formen (10) verwendet werden, deren jeweiligen Wandabschnitte (12, 13) so durch Scharniere (14) untereinander verbunden sind, daß sie in eine Ebene herausgeklappt werden können,
(b) vor Beginn des Reinigungsvorganges die Formen (10) jeweils in eine Ebene heruntergeklappt und
(c) in heruntergeklapptem Zustand magaziniert werden,
(d) sodann jeweils mindestens eine Form (10) automatisch in eine Reingungsvorrichtung (1) transportiert, dort behandelt und anschließend automatisch wieder aus der Reinigungsvorrichtung (1) heraus transportiert wird,
(e) und schließlich die Formen (10) nach dem Reinigungsvorgang wiederum in heruntergeklapptem Zustand magaziniert werden.

2. Verfahren nach Anspruch 1,
dadurch gekennzeichnet,
daß die Form (10) zum Transportieren und/oder für die Behandlung in der Reinigungsvorrichtung (1) in einer Haltevorrichtung (3) horizontal, vertikal oder geneigt angeordnet wird.

3. Verfahren nach Anspruch 2,
dadurch gekennzeichnet,
daß die Lage der Form (10) in einer Haltevorrichtung (3) während des Reinigungsprozesses gezielt verändert wird.

4. Verfahren nach mindestens einem der vorhergehenden Ansprüche,
dadurch gekennzeichnet,
daß die Form (10) und/oder die Haltevorrichtung (3) auf Rollen oder Bändern (4) oder mit Hilfe eines Transportwagens im Kreisverfahren oder Reversierverfahren in und aus der Reinigungsvorrichtung (1) transportiert wird.

5. Verfahren nach mindestens einem der Ansprüche 2 bis 4,
dadurch gekennzeichnet,
daß als Haltevorrichtungen (3) in einer Lagerposition anordenbare, aus der Lagerposition abrufbare Kassetten, Magazine und/oder Paletten verwendet werden.

6. Verfahren nach mindestens einem der vorhergehenden Ansprüche,
dadurch gekennzeichnet,
daß die Behandlung der Form (10) zumindest teilweise in einem geschlossenen Gehäuse der Reinigungsvorrichtung (1) erfolgt, und daß danach der Abrieb und/oder das Reinigungsmedium aus der Reinigungsvorrichtung entsorgt, insbesondere abgesaugt, ausgespült und/oder ausgeblasen werden.

7. Verfahren nach mindestens einem der vorhergehenden Ansprüche,
dadurch gekennzeichnet,
daß die Form (10) in einem Ultraschallbad mit Zusätzen von Reinigungsmitteln und/oder Säuren, insbesondere Citronensäure oder Phosphorsäure, bei 5°C bis 100°C gereinigt wird.

8. Verfahren nach mindestens einem der vorhergehenden Ansprüche,
dadurch gekennzeichnet,
daß es ein Bestandteil eines integrierten Produktionsprozesses ist, bei dem die Form (10) mit Hilfe einer Steuerung und Verwaltung durch speicherprogrammierbare Steuerungen und/oder Computer automatisch zusammengesetzt, oberflächenbehandelt, mit weiteren Transportvorrichtungen (8), insbesondere Rollen, Bändern, Wagen, Schwenk- und Hebearmen und/oder Robotern transportiert wird und die gereinigte Form (10) automatisch magaziniert wird.

9. Verfahren nach mindestens einem der vorhergehenden Ansprüche,
dadurch gekennzeichnet, daß eine quaderförmige, insbesondere würfelförmige Form (10) verwendet wird, bei der jeweils eine Seitenfläche einen Wandabschnitt (12, 13) bildet.

10. Verfahren nach mindestens einem der vorhergehenden Ansprüche,
dadurch gekennzeichnet,
daß eine Form (10) verwendet wird, deren Wandabschnitte (12) zumindest zum Teil über Spannbänder (18), Spannbügel (19), Spannhaken und/oder Schnellverschlüsse (11), zumindest im Bereich der Stoßkanten, verbunden sind.

11. Verfahren nach mindestens einem der vorhergehenden Ansprüche,
dadurch gekennzeichnet,
daß eine Form (10) verwendet wird, die im wesentlichen aus Stahl, insbesondere aus nichtrostendem Stahl, oder aus ausreichend widerstandsfähigen Kunststoffen, mit oder ohne Faserverstärkung, gebildet ist.

12. Verfahren nach mindestens einem der vorhergehenden Ansprüche,
dadurch gekennzeichnet,
daß eine Form (10) verwendet wird, deren Wandabschnitte (12, 13) an der dem Füllmaterial zugewandten Seite oberflächenvergütet, oberflächenbehandelt oder beschichtet sind.

13. Verfahren nach mindestens einem der vorhergehenden Ansprüche,
dadurch gekennzeichnet,
daß eine Form (10) verwendet wird, deren Wandabschnitte (12, 13) an der dem Füllmaterial zugewandten Seite mit Trennmitteln, insbesondere mit Ölen, Wachsen, Teflon, Kunstharzen und Polyurethan, behandelt oder beschichtet sind.

## Claims

1. Procedure for the removal of residues from molds by means of scrapers and/or brushes and/or cleaning media, wherein
(a) molds (10) are used the wall segments (12, 13) of which are assembled one with another by means of hinges (14) in such a way as to enable their being folded down to rest flush and flat on one and the same plane;
(b) the molds (10) are unfolded prior to cleaning, resting flush and flat on one and the same plane;
(c) the molds (10) are stored in their unfolded flat condition;
(d) at least one mold (10) in each cleaning cycle is automatically fed into the cleaning device (1), where it is treated, then - after treatment - automatically discharged from the cleaning device (1);
(e) the clean molds (10) are stored again in their unfolded flat condition.

2. Procedure as described in claim 1,
wherein
the mold (10) is arranged on a holding device (3) in a horizontal, vertical or inclined position, for improved conveyance through, and/or treatment in, the cleaning device (1).

3. Procedure as described in claim 2,
wherein
the position of the mold (10) on a holding device (3) changes in a purpose-orientated manner all during the cleaning process.

4. Procedure as described in either or several of the claims hereinbefore referred to,
wherein
the mold (10) and/or the holding device (3) - for the ease of feeding into, conveyance through, and discharge from, the cleaning device (1) in a rotary or reversing operation - is/are put on rollers or belts (4) or on a conveying carriage.

5. Procedure as described in either or several of claims 2 to 4 hereinbefore referred to,
wherein
a type of box, cartridge and/or pallet is used as a holding device (3) which, serving also as a storage container or platform, can be directly assigned to, and called up from, a given storage position.

6. Procedure as described in either or several of the claims hereinbefore referred to,
wherein
the treatment, which the mold (10) is subjected to, is effected, at least partly, in a closed chamber of the cleaning device (1), with the fines of abrasion and/or the cleaning medium being subsequently removed from the cleaning device preferably by suction, flushing and/or blasting.

7. Procedure as described in either or several of the claims hereinbefore referred to,
wherein
the mold (10) is cleaned in an ultrasonics bath containing detergents and/or acids, preferably citric acid or phosphoric acid, at a temperature between 5 °C and 100 °C.

8. Procedure as described in either or several of the claims hereinbefore referred to,
wherein
it is made a part of an integrated production process in which the mold (10) is automatically assembled, surface-treated, conveyed by means of further conveying devices (8) such as rollers, belts, carriages, swivel arms, lifting levers and/or robots, and in which the cleaned mold (10) is automatically stored up again upon completion of the cleaning cycle, by the aid of a control unit and a routine management brought about by a stored-program control.

9. Procedure as described in either or several of the claims hereinbefore referred to,
wherein
a square, preferably cubical, mold (10) is used, each of two opposite sides of which form one wall segment (12, 13).

10. Procedure as described in either or several of the claims hereinbefore referred to,
wherein
a mold (10) is used, the wall segments (12) of which are joint together, at least partly in the area of the butt edges, by means of straps (18), clamps (19), tenterhooks and/or snap closures (11).

11. Procedure as described in either or several of the claims hereinbefore referred to,
wherein
a mold (10) is used, made mainly of steel, especially of stainless steel, or of plastic material - with or without fibre reinforcement - offering a sufficient strength and resistance.

12. Procedure as described in either or several of the claims hereinbefore referred to,
wherein
a mold (10) is used, the wall segments (12, 13) of which, precisely the surface in contact with the filling material, got an appropriate surface finishing, surface treatment or coating.

13. Procedure as described in either or several of the claims hereinbefore referred to,
wherein
a mold (10) is used, the wall segments (12, 13) of which, precisely the surface in contact with the filling material, was treated or coated with parting compounds, especially oil, wax, teflon, synthetic resin, or polyurethane.

## Revendications

1. Procédé servant à nettoyer des moules de leurs résidus à l'aide de grattoirs et/ou de brosses et/ou d'agents de nettoyage et dans lequel
(a) sont utilisés des moules (10) dont les segments de paroi (12, 13) sont reliés entre eux par des charnières (14) de manière à pouvoir être ouverts et placés dans un seul plan,
(b) avant l'opération de nettoyage, les moules (10) ont leurs parois ouvertes et mises dans un plan
(c) et sont mis en magasin, parois à plat,
(d) puis dans lequel au moins un moule (10) à la fois est transporté automatiquement vers un dispositif de nettoyage (1), y est traité puis en est ressorti automatiquement,
(e) et dans lequel, pour finir, les moules (10) sont à nouveau stockés avec leurs parois rabaissées, après l'opération de nettoyage.

2. Procédé selon revendication 1, caractérisé en ce que le moule (10) est placé dans un dispositif de retenue (3) et maintenu en position horizontale, verticale ou inclinée pendant le transport et/ou le traitement dans l'installation de nettoyage.

3. Procédé selon revendication 2, caractérisé en ce que la position du moule (10) dans le dispositif de retenue (3) est modifiée de manière appropriée pendant l'opération de nettoyage.

4. Procédé selon au moins une des revendications précédentes, caractérisé en ce que le moule (10) et/ou le dispositif de retenue (3) est amené dans le dispositif de nettoyage (1) et ressorti de celui-ci sur des rouleaux ou tapis (4) ou à l'aide d'un chariot de transport selon un mouvement circulaire ou en navette.

5. Procédé selon au moins une des revendications 2 à 4, caractérisé en ce qu'on utilise en tant que dispositifs de retenue (3) des cassettes, magasins et/ou palettes pouvant être stockés à une adresse précise dont ils peuvent être à nouveau retirés.

6. Procédé selon au moins une des revendications précédentes, caractérisé en ce que le traitement du moule (10) se déroule au moins en partie dans un espace clos du dispositif de nettoyage et qu'ensuite les résidus enlevés et/ou l'agent nettoyant sont extraits du dispositif de nettoyage, plus particulièrement par aspiration, rinçage et/ou soufflage.

7. Procédé selon au moins une des revendications précédentes, caractérisé en ce que le moule (10) est nettoyé dans un bain à ultrasons avec addition de détergents et/ou d'acides, en particulier d'acide citrique ou d'acide phosphorique, à une température comprise entre 5° C et 100° C.

8. Procédé selon au moins une des revendications précédentes, caractérisé en ce qu'il constitue une partie d'un processus de production, où le moule (10) est assemblé, traité en surface, transporté au moyen d'autres dispositifs de transport (8), en particulier au moyen de rouleaux, tapis, chariots, bras pivotants et élévateurs et/ou de robots, de manière automatique, à l'aide d'une commande et d'une gestion assurées par un automate programmable et/ou un ordinateur.

9. Procédé selon au moins une des revendications précédentes, caractérisé en ce qu'on utilise un moule de forme parallélépipédique, plus particulièrement de forme cubique, où chaque plan latéral constitue un segment de paroi (12, 13).

10. Procédé selon au moins une des revendications précédentes, caractérisé en ce qu'on utilise un moule (10) dont les segments de paroi (12) sont reliés entre eux, au moins en partie, à l'aide de bandes de serrage (18), de brides de fixation (19), de pinces et/ou d'attaches rapides (11), au moins à proximité des rebords.

11. Procédé selon au moins une des revendications précédentes, caractérisé en ce qu'on utilise un moule (10) constitué en grande partie d'acier, en particulier d'acier inoxydable, ou de plastiques suffisamment résistants, avec ou sans renforcement par fibres.

12. Procédé selon au moins une des revendications précédentes, caractérisé en ce qu'on utilise un moule (10) dont les segments de paroi (12, 13) ont été soumis à un traitement d'amélioration de surface, à un traitementent superficiel ou de revêtement, du côté faisant face au matériau de remplissage.

13. Procédé selon au moins une des revendications précédentes, caractérisé en ce qu'on utilise un moule (10) dont les segments de paroi (12, 13) ont subi un traitement ou reçu un revêtement au moyen de lubrifiants, en particulier au moyen d'huiles, de cires, téflon, résines synthétiques et polyuréthane, du côté faisant face au matériau de remplissage.
